Europäisches Patentamt

(19) European Patent Office

Office européen des brevets

(11) Publication number: **0 000 981**
**B1**

# EUROPEAN PATENT SPECIFICATION

(12)

(45) Date of publication of patent specification:
11.03.81

(51) Int. Cl.³: **C 04 B 35/42**, C 04 B 35/66

(21) Application number: **78300228.0**

(22) Date of filing: **01.08.78**

(54) **Plastic chrome ore refractory compositions.**

(30) Priority: **25.08.77 US 827642**
**27.04.78 US 900540**

(43) Date of publication of application:
**07.03.79 Bulletin 79/5**

(45) Publication of the grant of the patent:
**11.03.81 Bulletin 81/10**

(84) Designated Contracting States:
**BE DE FR GB LU NL SE**

(56) References cited:
**DE-C-677 322**
**FR-A-1 321 817**
**GB-A-1 002 486**
**GB-A-1 069 968**
**US-A-2 406 910**

(73) Proprietor: **KAISER ALUMINUM & CHEMICAL CORPORATION, 865 Kaiser Building 300 Lakeside Drive, Oakland California 94643 (US)**

(72) Inventor: **Cassens, Nicholas, 4082 Suffolk Way, Pleasanton California 94566 (US)**

(74) Representative: **Oliver, Roy Edward et al, POLLAK,MERCER & TENCH High Holborn House 52-54 High Holborn, London WC1V 6RY (GB)**

## Plastic Chrome Ore Refractory Compositions

This invention relates to plastic chrome ore refractory compositions. The invention is concerned with refractory compositions comprising 85% to 95% size-graded chrome ore, 1% to 5% of alkali metal silicate binder, 0% to 5% of a plasticizer other than hectorite and sufficient water to form a plastic mass, all percentages being by weight and based on the total dry weight of the ingredients. The amount of alkali metal silicate binder stated is calculated as sodium silicate.

Plastic chrome ores are well-known in the refractories industry and are described, for example, in U.S. Patent Specifications 2,792,311 and 2,965,505 and in British Patent Specification 1,002,486.

Some plastic chrome ore refractory compositions have the disadvantage of tending to bloat or swell under conditions of rapid heating. The compositions are made up with water so as to be in a form suitable for application or other treatment in preparation for use and setting of the compositions essentially involves driving of water from the composition; temperatures at or a little above the boiling point of water are commonly used for this purpose, therefore, but the tendency to bloat can be very troublesome. The compositions disclosed in British Patent Specification 1,002,486 are proposed in an attempt to solve this problem. Specifically, this specification discloses the addition of flock or asbestos in minor amounts to these compositions, in order to prevent such swelling or bloating.

Although the compositions described in British Patent Specification 1,002,486 have proved commercially successful, particularly when they include asbestos, there is some concern that asbestos may pose a health hazard and, accordingly, it is desirable to produce a non-bloating plastic chrome ore composition which does not require the use of asbestos.

The present invention is directed to the solution of this problem.

The invention is based upon the discovery that any undesirable tendency to swell or bloat under conditions of rapid heating, such as apply when moisture is being driven off from the composition, is minimized or even eliminated if the refractory composition includes 0.5% to 5% of hectorite, the percentage amount being by weight and based upon the total dry weight of the ingredients of the composition.

The chrome ore used can be any of such materials, either natural or synthetic, well-known in this art. Size-graded chrome ore is used, in order to achieve good density upon placement of the refractory compositions, as will be well understood. For example, the chrome ore may all be less than 9.5 mm in diameter and size-graded so that roughly one-third is greater than 2 mm in diameter, roughly one-third is less than 2 mm in diameter and greater than 0.15 mm in diameter and roughly one-third is less than 0.15 mm in diameter. This size grading means that all the chrome ore passes a 9.5 mm (⅜ inch) mesh screen, roughly one-third is retained on a 9-mesh screen, one-third is retained on a 100-mesh screen and the remaining one-third passes a 100-mesh screen.

Hectorite is a hydrous silicate of magnesium and lithium, sometimes containing fluorine, and occurs naturally near Hector, California, United States of America. It has also been produced synthetically and either form can be used in carrying out this invention. However, the natural material is preferred, particularly a refined grade of the natural material. Hectorite is a well-known material which has been used in many compositions, including refractory gun mixes, for example as disclosed in U.S. Patent Specification 2,407,725. It has also been used as a coating on refractory material, for example chrome ore. This is disclosed for instance in U.S. Patent Specification 2,406,910, which is concerned with the well-known expansion of chrome ore refractory products at high temperature when they absorb iron oxide, either from a hot furnace atmosphere or from a molten slag. This troublesome expansion is also sometimes referred to as "bloating", but it is a very different phenomenon from the one which the present invention is concerned with. In U.S. Patent Specification 2,406,910, the solution to the problem of the expansion of the chrome ore is to place a coating of hectorite on the chrome ore particles. At high temperatures, such as gives rise to the troublesome expansion, for example about 1200°C, this coating reacts with the particles, imparting a protective coating to them. The action of the hectorite in the present invention, on the other hand, takes place at much lower temperatures, for example temperatures slightly above 100°C, at which the compositions are dried. In other words, the swelling or bloating which the present invention alleviates takes place during drying of the refractory compositions, and is totally unrelated to the well-known expansion due to chemical action, which takes place in chrome ore refractories at elevated temperatures.

The binder material may be any of the many well-known varieties of sodium silicate. It is believed that it is the swelling action of the sodium silicate binder upon drying which leads to bloating of conventional plastic chrome compositions and that such bloating tendency is higher when a sodium silicate of relatively high silica content is used. Accordingly, this invention is particularly useful with such high silica sodium silicates. The sodium silicate can be added either dry or in liquid form; the latter form has proved to be particularly convenient. However, in which ever form (dry or liquid solution) the sodium silicate is added, the percentage amounts given in the specification and claims refer to the amount of dry material added. In other words, if a solution is added, the percent of sodium silicate added is the amount of that material in the solution (i.e., the amount obtained upon drying the solution). Other, equivalent alkali metal silicates, for example lithium silicate, can be used.

While a plasticizer is not essential, it has been found to impart improved workability to the plastic chrome ore and the inclusion of a plasticizer is therefore preferred. The plasticizer can be any of the many well-known materials of this type, for example, it can be an organic material, e.g. methyl cellulose. However, a clay, particularly a plastic kaolin type of clay, has proved particularly useful in making compositions according to this invention.

As used in this specification, the term "clay" means a hydrous aluminosilicate type of mineral, for example of the kaolinite type, which exhibits lubricity and plasticity when admixed with water. See, for example, the definition of "clay" in Ceramic Glossary (American Ceramic Society, 1963). The term "clay" is particularly to be distinguished from the hectorite used in compositions according to the present invention, which is a magnesium silicate mineral.

It is possible to omit entirely the plasticizer in the composition, relying on the hectorite, and perhaps increasing its amount, to provide the workability desired in the composition. However, this approach will generally prove uneconomic, since there are many clay materials which are considerably cheaper than hectorite.

In making a composition according to this invention, the sized chrome ore and other ingredients are mixed together, for example in a Muller mixer, and sufficient water is then added to form a plastic mass. The precise amount of water to be added depends upon the types and amounts and sizing of the materials used, including the form in which the sodium silicate or other binder is added, but will generally range from 1% to 5% by weight, based on the total weight of the composition.

The composition can also contain other ingredients without departing from the scope of this invention. For example, it can contain a sequestering agent (for example, ethylene diamine tetra-acetic acid), which prevents premature reaction, and consequent setting of the mix, between the sodium silicate binder and any stray magnesia which may have got into the composition.

As used in the specification and claims, the expression "based on the total dry weight of the ingredients" means that the weight percentages given are based upon the amount of material which would be found in the composition after it had been dried; that is to say, after any water, whether added to form the plastic mass, added as part of the alkali metal silicate binder solution or added with any sequestering agent solution, had been removed.

Example

A plastic chrome ore refractory composition according to this invention was made from 88.3 parts of sized Transvaal chrome ore, 7.83 parts of RU grade sodium silicate (an aqueous solution of sodium silicate made by Philadelphia Quartz Co. having 13.8% $Na_2O$, 33.2% $SiO_2$ and a $SiO_2$:$Na_2O$ ratio of 2.4:1), 2.62 parts of Hamilton II clay (a plastic kaolin), 0.25 part of Versene (Trade Mark – an ethylene diamine tetra-acetic acid sequestering agent) and 1 part of Baroid Macaloid, a refined hectorite ore. A 15 kg batch of this composition was mixed in a small Muller mixer, together with 2.2 parts of water (in addition to the water contained in the sodium silicate solution). As will be apparent, the mixture contained on the dry basis 92.4% of chrome ore, 3.9% of sodium silicate, 2.7% of clay and slightly over 1% of hectorite.

The Transvaal chrome ore was sized so that all was less than 9.5 mm in diameter (i.e., all passed a ⅜ inch mesh screen) and 28.1 parts were greater than 2 mm in diameter (i.e., were retained on a 9-mesh screen), 28.1 parts were smaller than 2 mm and larger than 0.15 mm (i.e., retained on a 100-mesh screen), and 32.1 parts were smaller than 0.15 mm. The chrome ore over 2 mm in size had the following typical chemical analysis (ignited basis): 11.1% MgO, 0.4% CaO, 8.2% $SiO_2$, 14.5% $Al_2O_3$, 39.7% $Cr_2O_3$ and 26.1% $Fe_2O_3$; and that under 2 mm in size, a beneficiated ore, the following typical analysis: 44.1% $Cr_2O_3$, 28.7% $Fe_2O_3$, 15.1% $Al_2O_3$, 9.7% MgO, 0.2% CaO and 2.2% $SiO_2$. The Hamilton clay and the hectorite were both substantially all less than 44 microns in size (i.e., both all passed a 325-mesh screen) and the Versene (Trade Mark) was in the form of an aqueous solution.

This composition was tested for bloating by hand ramming it into a can 10.5 cm in diameter by 12 cm high using a 20 mm (¾ in) diameter steel rod. The excess material was cut off with the edge of a trowel and the top surface smoothed. Four vent holes were made in the exposed surface with a 3 mm (⅛ in) diameter welding rod to a depth of 5 cm (2 in). After the material had dried for 48 hours at room temperature and had then been dried in an oven for 16 hours at 120°C (250°F), the height of the specimen above the rim of the can was measured and found to be 11.5 mm (0.46 in). The material was also stored in plastic bags for a total of 16 weeks, after which time it still remained plastic.

This composition can be compared with another composition made in the same way except that, in place of the hectorite, 1 part of Volclay, a plastic bentonite clay, was used, and 1.5 parts of water were used. Although this comparison composition remained plastic after storage for 12 weeks, in the bloat test it showed an increased height of 23.5 mm (0.92 in), an unacceptably high amount.

In addition to the two foregoing compositions, additional similar compositions were made using the following additives in place of the hectorite or Volclay bentonite: alumina dust collector fines, perlite, expanded vermiculite, both chopped and ball milled aluminosilicate glass fibres, cattle hair, volatilized silica, kyanite, rice hull ash, mica, wollastonite, pyrophyllite, fibrous talc, diatomaceous earth and waste material from rug manufacture. Many of these comparison compositions failed to maintain their plasticity during storage, becoming set in a matter of a week or two. Others, although they did not set up prematurely, showed bloating of from 20 to 44 mm (0.78 to 1.73 in), all unacceptably high.

For comparison purposes, a similar composition made with 1 part of asbestos, as disclosed in U.S. Patent Specification 3,297,458, showed a bloat of 11.5 mm (0.45 in), with good storage for 16 weeks.

Each of the bloat heights reported is the average of two separate tests on the same composition.

Although the reason why hectorite, and the previously known asbestos and floc, prevent excessive bloating of these plastic chrome ore compositions is not known with certainty (and applicant does not wish to be bound to any theory), the results of a very large number of tests indicate that as the rammed bulk density of the compositions increases, their tendency to bloat also increases. From these results, the following empirical equation relating bloat height (in inches) to rammed density (in pounds per cubic foot, pcf) has been developed:

(1) Bloat = −13.57 + 0.067 × Density;
or, in metric units,
(2) Bloat(mm) = −344.7 + 106.1 × Density(g/cc).

From many years experience with these platic chrome compositions, it has been determined that a bloat (in the standard test described) of 16 mm (0.625 in) is the maximum acceptable if the composition is to perform satisfactorily in service. From the above empirical relationship, it can be determined that compositions with an acceptably low bloat will have a rammed bulk density of less than about 3.4 g/cc (212 pcf). From these many tests, it appears that only hectorite (or asbestos or floc) additions yield compositions with an adequately low rammed bulk density to have adequately low bloat, combined with good storage life. In other words, it appears that the inclusion of these materials in the composition leads to a relatively low density, an open structure which permits any expansion which occurs upon heating of the sodium silicate or other silicate binder to be absorbed within voids in the structure, rather than expanding the structure of the refractory itself.

In the specification and claims, percentages and parts are by weight unless otherwise indicated. Mesh sizes referred to herein are Tyler standard screen sizes which are defined in Chemical Engineers' Handbook, John H. Perry, Editor-in-Chief, Third Edition, 1950, published by McGraw Hill Book Company, at page 963. For example, a 100 mesh screen opening corresponds to 147 microns. Analyses of mineral components are reported in the usual manner, expressed as simple oxides, e.g. MgO and $Cr_2O_3$, although the components may actually be present in various combinations, e.g. as a magnesium chromite.

## Claims

1. A plastic chrome ore refractory composition, comprising 85% to 95% of size-graded chrome ore, 1% to 5% of alkali metal silicate binder, 0% to 5% of plasticizer other than hectorite and sufficient water to form a plastic mass, characterised in that the composition also comprises 0.5% to 5% of hectorite, all percentages being by weight and based on the total dry weight of the ingredients.

2. A refractory composition according to claim 1, wherein the hectorite is a natural hectorite.

3. A refractory composition according to claim 2, wherein the natural hectorite is a refined hectorite.

4. A refractory composition according to claim 1, 2 or 3, wherein 0.1% to 5% of plasticizer is present.

5. A refractory composition according to claim 4, wherein from 1% to 5% of clay is present as plasticizer.

6. A refractory composition according to claim 5, wherein the clay is of the plastic kaolin type.

7. A refractory composition according to any preceding claim, wherein the sodium silicate binder is added as a liquid solution.

8. A refractory composition according to any preceding claim, wherein the chrome ore is of the Transvaal type.

## Patentansprüche

1. Feuerfeste, plastisch verformbare Masse auf der Basis von Chromerz, die 85% bis 95% Chromerz ausgewählter Grösse, 1% bis 5% Alkalimetallsilikatbinder, 0% bis 5% eines von Hektorit verschiedenen Weichmachers und ausreichend Wasser zur Bildung einer plastischen Masse enthält, dadurch gekennzeichnet, dass die Masse ferner 0,5 bis 5% Hektorit enthält, wobei alle Prozentangaben Gewichtsprozente sind und sich auf das gesamte Trockengewicht der Bestandteile beziehen.

2. Feuerfeste Masse nach Anspruch 1, dadurch gekennzeichnet, dass das Hektorit ein Natur-Hektorit ist.

3. Feuerfeste Masse nach Anspruch 2, dadurch gekennzeichnet, dass das Natur-Hektorit ein gereinigtes Hektorit ist.

4. Feuerfeste Masse nach Anspruch 1, 2 oder 3, dadurch gekennzeichnet, dass 0,1% bis 5% Weichmacher vorhanden ist.

5. Feuerfeste Masse nach Anspruch 4, dadurch gekennzeichnet, dass 1 bis 5% Ton als Weichmacher vorhanden ist.

6. Feuerfeste Masse nach Anspruch 5, dadurch gekennzeichnet, dass der Ton ein plastischer Kaolin-Typ ist.

7. Feuerfeste Masse nach einem der vorhergehenden Ansprüche, dadurch gekennzeichnet, dass der Natrium-Silikatbinder als flüssige Lösung zugegeben wird.

8. Feuerfeste Masse nach einem der vorhergehenden Ansprüche, dadurch gekennzeichnet, dass das Chromerz ein Transvaalerz ist.

**Revendications**

1. Composition réfractaire de minerai de chrome plastique, comprenant 85 à 95% de minerai de chrome classé, 1 à 5% de silicate de métal alcalin comme liant, 0 à 5% d'un plastifiant autre que l'hectorite et suffisamment d'eau pour former une masse plastique, ladite composition étant caractérisée en ce qu'elle contient également 0,5à 5% d'hectorite, tous les pourcentages étant en poids, par rapport au poids total à sec des ingrédients.

2. Composition réfractaire selon la revendication 1, caractérisée en ce que l'hectorite est une hectorite naturelle.

3. Composition réfractaire selon la revendication 2, caractérisée en ce que l'hectorite naturelle est une hectorite raffinée.

4. Composition réfractaire selon la revendication 1, 2 ou 3, caractérisée en ce qu'elle contient 0,1 à 5% d'un plastifiant.

5. Composition réfractaire selon la revendication 4, caractérisée en ce qu'elle contient 1 à 5% d'argile comme plastifiant.

6. Composition réfractaire selon la revendication 5, caractérisée en ce que l'argile est du type kaolin plastique.

7. Composition réfractaire selon l'une quelconque des revendications précédentes, caractérisée en ce que le silicate de sodium liant est ajouté sous forme d'une solution liquide.

8. Composition réfractaire selon l'une quelconque des revendications précédentes, caractérisée en ce que le minerai de chrome est du type Transvaal.